# EUROPEAN PATENT SPECIFICATION

(11) **EP 1 714 798 B1**
(45) Date of publication and mention of the grant of the patent: **12.09.2012**
(21) Application number: 04787915.0
(22) Date of filing: 21.09.2004
(51) Int. Cl.: B60B 21/02

(54) **LIGHT ALLOY WHEEL**
LEICHTLEGIERUNGSRAD
ROUE EN ALLIAGE LEGER

(30) Priority: 03.02.2004 JP 2004027360
(43) Date of publication of application: 25.10.2006
(73) Proprietor: WASHI KOSAN CO., LTD., Tokyo 108-0074 (JP)
(72) Inventor: ONO, Kotaro, Fukui 910-0024 (JP)
(74) Representative: Strehl Schübel-Hopf & Partner
(86) International application number: PCT/JP2004/013732
(87) International publication number: WO 2005/075220

(56) References cited:
- WO-A-01/17799
- JP-A- 5 278 401
- JP-A- 8 169 201
- JP-A- 60 012 314
- JP-A- 2000 108 602
- JP-A- 2000 142 007
- JP-A- 2003 527 269
- JP-U- 59 067 305
- US-A1- 2003 141 755

## Description

### Field of the Invention

This invention relates to a wheel formed of lightweight metal for two-wheeled vehicles and motorcycles as well as automobiles having at least four wheels; in which cavity is formed and rigidity is enhanced in rim part so as to enlarge width of outer rim and avoid weight increase due to such enlarging, in order to achieve broad extent of flexibility on ornamental designing of the outer rim part of the wheel, such as "soft rim" that is trendy in recent years.

### Background of the Invention

The light alloy wheel is made from aluminum or magnesium and is light-weight and easy to be worked. Thus, the light alloy wheels excellent in ornamental appearance are provided; and mounting ratio or share of the light alloy wheels is increased to an extent that such light alloy wheels are mounted on vehicles at their assembly lines. Exterior contour of the outer rim is restricted by ETRTO (European Tire and Rim Technical Organization) standard or by JATMA (Japan Automobile Tire Manufactures Association) standard; in regard to contour of tire-mounting side of the outer rim, such as contours of a bead seat, a hump, a slope extending between the hump and a rim well, as well as of inner face of a rim flange. Due to contour-wise restrictions by the standards, even though there are some contour-wise deviations, outer circumferential part of the rim has to have a large width when to adopt the so-called soft rim or the like, in which exterior side of the rim is formed to have gentle curvature. Thus, areal size of the cross section of the outer rim become large and thereby causing disadvantage of weight increase of the wheel.

Inclination of the slope extending between the hump to the rim well, in the four-wheel automobile, is stipulated to be 20 degree or more in respect of a plane perpendicular to the rotational axis in the ETRTO standard, and is stipulated to be 20±5 degree in the JATMA standard. Dimension of the slope in regard to "height" or dimension in wheel-radial direction between the bead seat and the rim well is stipulated to be 17.3mm or more in the ETRTO standard, and is stipulated to be 17.0mm or more in the JATMA standard. Thus, when the inclination is set to be 20 degree or more, the dimension of the slope tends to become large, and thereby forming the wheel that has small offset dimension. In exterior view, distinctive fashionability is achieved as a disc face is arranged at depth-wise inward of the wheel. However, strength of the rim is deteriorated and weight of the wheel is increased because wall thickness is increased to increase weight of the wheel.

Such wheels are taken up to be favorable in aftermarket or spare wheel market, but are not adopted by automobile makers. Reason for this is as follows; rigidity of the wheel is decreased and construction of the braking mechanism is enlarged, so that offset dimension is enlarged and the disc has to be arranged in vicinity of the outer rim flange. Moreover, the inclination of the slope makes a large difference in rigidity of the rim, and thus it is desirable to set the inclination in view of such difference.

Wheels for the two-wheeled vehicles are also specified in the ETRTO and JATMA standards: the inclination of the slope extending from the rim well to the hump is around 22 degree with tolerance of 5 degree; the height or radial dimension of the hump is 12.5-13mm; and the inclination of the bead seat is 5 ± 1 degree. Thus, the wheel for the two-wheeled vehicles is almost homothetic to that for the four-wheeled vehicles except that inner and outer rims are indistinctive with each other and have same contour.

Meanwhile, with increase of the travel speed of the vehicles, light weight and rigidity is required to the wheel; and thus proposed are methods of arranging cavities in the rim ands spokes. Mentionable as relevant prior-art documents are; JP-1993-278401A (Japan Patent Application Publication No. H05-278401); and JP-2003-527269T (Japanese translation Publication of WO01/017799; a counterpart of US6783190B1). Main theme of such methods is that cavities in the spokes and rim part are communicated with each other. Thus, facilitating of forming such cavities is prioritized, and ornamental appearance of the rim contour is not mentioned. Present invention is made in view of this. WO01/017799 forms the basis of the two-part form of present claim 1. Further relevant prior art is disclosed in JP 60 012314, JP 2000 142 007, JP 200 108602, and JP 59067305 U.

### Discosure of the Invention

### Problems to be Solved by the Invention

When the outer or inner rims are formed as solid as usual, shaping of the wheels for the two-wheeled and four-wheeled vehicles are prescribed in principle, even though somewhat varied, because the ETRTO or JATMA standards are widely adopted for the contour on tire-mounting side. Thus, when sheet of light metal is plastically deformed, exterior contour of the rim becomes similar to inner contour of the rim. Even when the wheels are formed by casting or forging, or by die casting, the shaping of the wheels is largely constant although somewhat thick-wall and thin-wall parts are formed. Thus, external appearance of the wheel inevitably becomes to be uniform. Hence, when exterior contour of the outer rim is freely designed in respect of its ornamental appearance, considerably large area of cross section of the outer rim become required as to cause thick-wall part and increase weight of the wheel.

It is aimed to provide a wheel having improved ornamental appearance and rigidity as a monocoque construction excellent in ornamental appeal, by arranging a cavity in each part that otherwise becomes thick wall part and thereby disconnecting dependency to contour of tire-mounting side of the wheel. Such a way is especially effective in improving ornamental appearance on rim part of the wheels for two-wheel vehicles because cross section of the wheel is symmetrical. It is aimed to facilitate designing of the ornamental appearance of the rim part of the wheel as freely as possible by arranging a cavity in the rim and thereby enlarging width of the outer rim. It is also aimed to improve rigidity of the rim.

### Means to Solve the Problems

The above objects are met by the wheel defined in present claim 1. According to an example useful tounderstand the invention the light alloy wheel comprises an outer rim having a tubular rim part that is consisting of: a bead seat (B); a hump (H); a slope wall (S); an ornamental wall (D); and a cavity defined by these four walls; and wherein,
when assuming a solid rim part that is consisting of the bead seat, the hump and the slope wall and has a typical standardized shaping construction in respect of inclination, dimensions and wall thicknesses, and in conformity mainly with design specification of a tire;
(a) a ratio of cross-sectional area of the tubular rim part to that of the solid rim part is no more than 100%;
(b) a ratio of geometric moment of inertia of the tubular rim part to that of the solid rim part is no less than 100%; and
(c) thickness (Bt) of the bead seat, thickness (St) of the slope wall and average thickness (Dt) of the ornamental wall (D) are optimized as to make the ratio of cross-sectional area as small as possible and as to make the ratio of geometric moment of inertia as large as possible. Thus, shapes and thicknesses of the bead seat B, the hump H and the slope wall S are designed as to increase rigidity of the wheel as possible and to achieve fashionable appearance as freely as possible.

The ornamental wall D in view of its cross section is comprised of an angled wall having at least one angled portion, and/or of a curved wall, which may be Bezier free curve. The average thickness is employed in view of that thick part may be smoothly connected with thinner part in the ornamental wall D. Whereas contour of the ornamental wall D is determined in accordance with ornamental design of the wheel, decreasing of weight and increasing of rigidity of the rim is achieved by arranging a cavity and optimizing thicknesses of the walls, the bead seat and the hump. Inner face of the cavity in the tubular rim may be provided with undulation or angled portion as well as curvature, at either of a bead seat (B), a hump (H), a slope wall (S) and an ornamental wall (D), if necessary or appropriate, within scope of the invention.

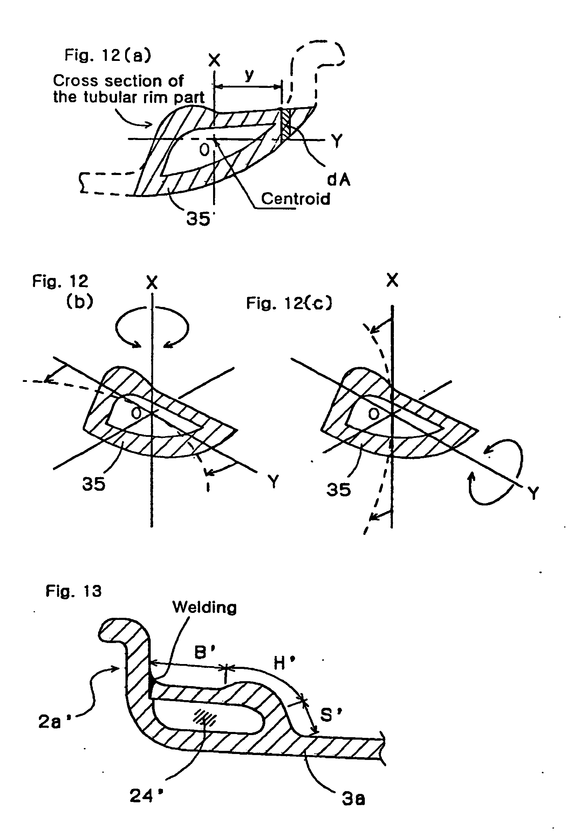

The geometric moment of inertia indicates some resistibility against external force that otherwise cause deformation of the wheel. A rough explanation on the term is made below. Fig. 12(a) exemplarily shows a cross section 35 of the tubular rim part as a hatched area. Center point "O" is centered on the drawing and positioned to correspond to mass center. The geometrical moment of inertia "I" is represented by following equation: I=Σy²dA, where "dA" designates a minute area as a result of infinite division of the cross section, "y" designates distance from an axis "x", and the minute areas "dA" multiplied by square of the respective distances "y" are summed up to obtain the geometrical moment of inertia. This is conceptually illustrated on Fig. 12(b) and Fig. 12(c), in each of which the cross sectional area is depicted as a hatched area. Fig. 12(b) illustrates a state the rim undergoes an external force that is to bend-wise deform the cross section 35 around the axis "x" in a way for forming a curvature designated by a dashed line. Fig. 12(c) illustrates a state the rim undergoes an external force that is to bend-wise deform the cross section 35 around the axis "y" in a way for forming a curvature designated by a dashed line. In Embodiments, the geometrical moment of inertia "Ix-x" around the axis "x" and the geometrical moment of inertia "Iy-y" around the axis "y", as obtained by calculations, are shown in respective figures. The above indicates that as the larger becomes the obtained value, the larger becomes the resistibility against bending.

The bead seat B, the hump H and slope wall S are formed as constant in accordance with the ETRTO or JATMA standards; and any basic contour is given to the ornament wall. Then, the geometrical moment of inertia is calculated as to investigate the resistibility against bending and to be used as indicator for light weight formation. Actually, the spokes are connected to the rim, and thus, a three-dimensional analysis is required for more accurate calculation. However, the rim part having excellent values of geometrical moment of inertias around the axis "x" and the axis "y" should also has a favorable vector value in a direction at 45 degree to the axis, and thus also be excellent when the spokes are connected. Details of shaping of the rim having the cavity are explained in the Embodiments.

Invention-wise wheel according to claim 2 comprises joints at which the rim is joined with spokes and the cavity in the rim is joined with cavities in the spokes, and trim-wise rounding and/or augmentation on each of the joints. In this way, stress concentration at the joint due to its different wall thicknesses is avoided. For example, an edge would be formed on a juncture between inner wall surface of the rim and inner wall surface of the spoke; and thus the trim-wise rounding is formed at the juncture as to form curved or round face instead of the edge. Because of forming a curved face on outside surface on the joint as needless to say, the augmentation is formed also on the tubular rim part, while dimension of the augmentation along wall of the tubular rim part is not so large. Increasing of curvature radius of the curved wall will affect exterior view of the wheel; and thus, the augmentation is provided on inner face of the tubular rim part in a manner to gradually increase thickness of the wall of the rim, when to avoid the stress concentration.

Spokes having the cavities or hollow spokes are shown in the JP-1993-278401A and the JP-2003-527269T for example. These do not make a mention on ornamental design of the spokes, while contour of the spokes is fundamental to ornamental appearance of the light alloy wheel. There are various ornamental designs, and some of them necessitate an elaboration on direction of stress when the wheel is mounted on the right-hand side or left-hand side of the vehicle. The spokes having the cavities are desired to improve ornamental appeal and in same time to achieve increase of the geometrical moment of inertia and decrease of weight, of the joints and the spokes. In view of these, the invention encompasses adopting cross-sectional contours of cavity of the spokes in a manner to improve the geometrical moment of inertia and rigidity of the spokes.

Invention-wise wheel according to claim 3 has a feature in that the tubular rim is arranged as the inner rim. Thus, the bead seat, the hump and the slope wall are formed on inner rim flange in a manner similar with the wheel in which the tubular rim is arranged on outer rim flange. And, the ornamental wall D is replaced by rim well. The slope wall is formed within an extent not bothering mounting of the wheel; while contours of the slope wall same with those for the tubular rim on outer rim flange are not required. The tubular rim having a cavity for the geometrical moment of inertia may also be formed on any position between the outer and inner rim flange, instead of disposing in vicinity of the outer or inner rim flange, so as to increase rigidity of the rim. As width of the rim tends to become large in recent years, the tubular rim on cylindrical part makes resistibility against bending or bowing.

### Advantageous Effect of the Invention

According to the invention, shaping of the outer rim is modified to have the cavity so that ornamental design on exterior view of the outer rim is freely set irrespective of contour on tire-mounting face of the outer rim, which is more or less restricted by shaping or dimension of the wheel based on the ETRTO or JATMA standard. Thus, exterior face of the rim may be provided with any of various ornamental design in a manner to widen a range of adoptable variations of ornamental design of wheel, which match up ornamental design of the body of the automobile.

### Best Mode for Carrying out the Invention

The bead seat, the hump and the slope wall, which forms a rim wall of the light alloy wheel, are integrally formed with additional rim wall, as to form a cavity. Detailed investigation has been made on shaping of thus constructed rim part to obtain optimum shaping and wall thicknesses for achieving weight reduction and high rigidity.

### Embodiment 1

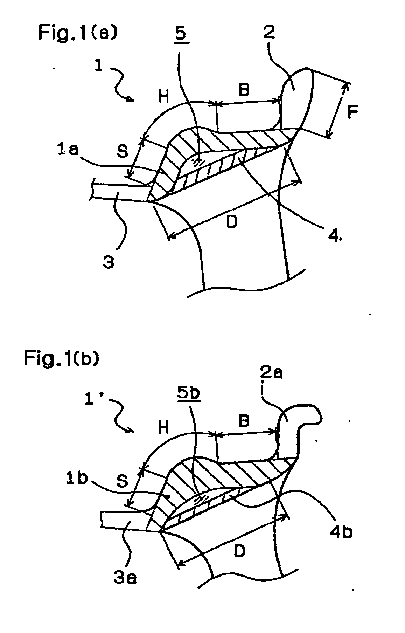

One embodiment of the invention is explained in line with the drawings. Fig. 1(a) is a sectional view showing an outer rim 1 that is manufactured by conventional forging technique; a rim wall 1a, which is designated by hatching, is consisting of a bead seat B, a hump H and a slope wall S; and the outer rim 1 is formed of the rim wall 1 a and a flange wall F that forms an outer flange 2. The outer flange 2 is required to be shaped to have a thickness enough for bearing stress in axial direction, while areal size of the outer flange 2 is rather small or insufficient to form main part of the ornamental design and thus, the outer flange 2 makes an ornamental exterior face appendant to the ornamental wall D.

A rim well 3 that is continuous with inner rim is formed to have a radius from the axis in an extent to avoid contact with braking device. Height or radius from the axis, of the bead seat raised from the rim well 3 is determined as to form a recess required for deeply placing of a tire on course of mounting the tire. Walls of the rim well and the bead seat have thickness of about 3-8mm while the thickness varies depending to manufacturing method adopted among forging, casting and die casting and the like.

Hence, outer face of a rim wall 1a consisting of the bead seat B, the hump H and the slope wall S is shaped as similar with tire-mounting face of the rim wall and would realize ornamental appearance of the outer rim 1. On the outer face of the rim wall 1a, an additional rim wall 4 as an ornamental wall D is integrally formed as to bridge between the flange wall and the rim well, so that outer face of the ornamental wall makes exterior face realizing the orna-mental appearance and may be modified to take various contours.

Fig. 1(b) is a cross-sectional contour of the outer rim 1' of a wheel that is manufactured by casting technique and has inner diameter same with that of the above-described wheel. Due to difference in strength of the metal, a rim wall 1b is thick-walled and additional rim wall 4b as an ornamental wall D is formed integrally with the main rim wall 1 b. Thus, a cavity 5 or 5b is formed by providing the additional rim wall 4 or 4b respectively.

While wall thickness of the additional rim wall 4 shown in Fig. 1(a) may be variously set, excess thickening is not desirable because cross-sectional area of solid part of the tubular rim part increases with the increase of the wall thickness. The rim wall 1 a and the additional rim wall 4 forms a cavity 5 as to form a tubular rim part that improves resistibility against deformation of the wheel by an external force. The resistibility may be calculated as geometrical moment of inertia, while the resistibility may also be called as rigidity.

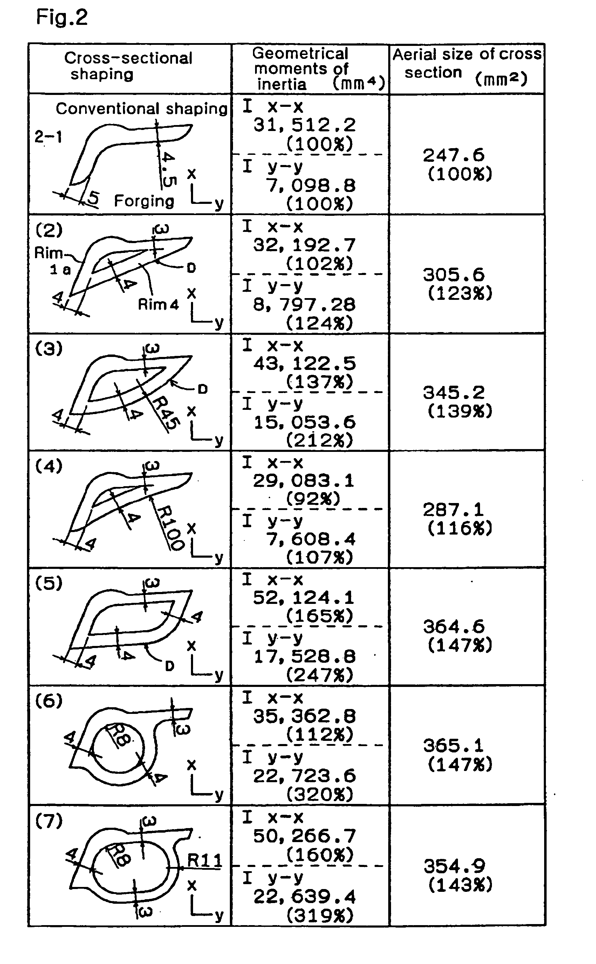

In regard to the tubular part formed of the rim wall 1a, the additional rim wall 4 and the cavity, shaping of the additional rim wall 4 is varied; and the geometrical moment of inertia and areal size of the cross section are calculated to each of the variations and are shown in Fig. 2 as a table form. In the Figure, conventional shaping 2-1 by a forging technique and various tubular shaping constructions 2-2 to 2-7 are respectively illustrated, in which wall thickness dimensions at various portions are shown.

A cross section of tubular rim part having the tubular shaping construction 2-2 in the Fig. 2 is substantially triangular, and has the additional rim wall 4 integrally formed with the rim wall 1a. With regard to calculating the geometrical moment of inertia, the coordinate axis "x" is taken as a direction along diameter of the wheel; and the coordinate axis "y" is taken as a width direction of the rim. The ornamental wall D, as the additional rim wall, of tubular shaping constructions 2-3 to 2-7 is formed of; a pair of flat faces having an angle between them, and/or a smoothly curved face. Percentage values for each of the tubular shaping construction are on basis of amounts for the conventional shaping 2-1.

It is noteworthy that, as in the tubular shaping construction 2-4, the geometrical moment of inertia around the "x" axis is decreased in spite of increasing of cross sectional area. As seen from the result, outwardly protruding shapes of the additional wall 4 are preferred.

In general, weight increase is inevitable when to increase rigidity of the wheel. Multiplication of rigidity by 1.5 to 3 is achievable; and in view of this, it is desirable to design the contour of ornamental wall D by taking account results of the figure. Tubular shaping constructions 2-3 and 2-5 are preferable also in view of ornamental appearance; and when to prescribe the geometrical moment of inertia about the x axis and y axis in a well-balanced manner, the tubular shaping construction 2-5 is advantageous in which the geometrical moment of inertia about the y axis is increased.

In order to provide a cavity in the rim, casting technique is preferred in view of production cost and process steps, while the forging technique is also adoptable. In case of the forging technique, the additional rim wall 4 is added for forming the cavity onto the rim wall 1 a that is shaped as a result of pursuing a light-weight structure. Thus, decreasing of weight is not achievable, while rigidity of the rim is increased due to increase of the cross-sectional area.

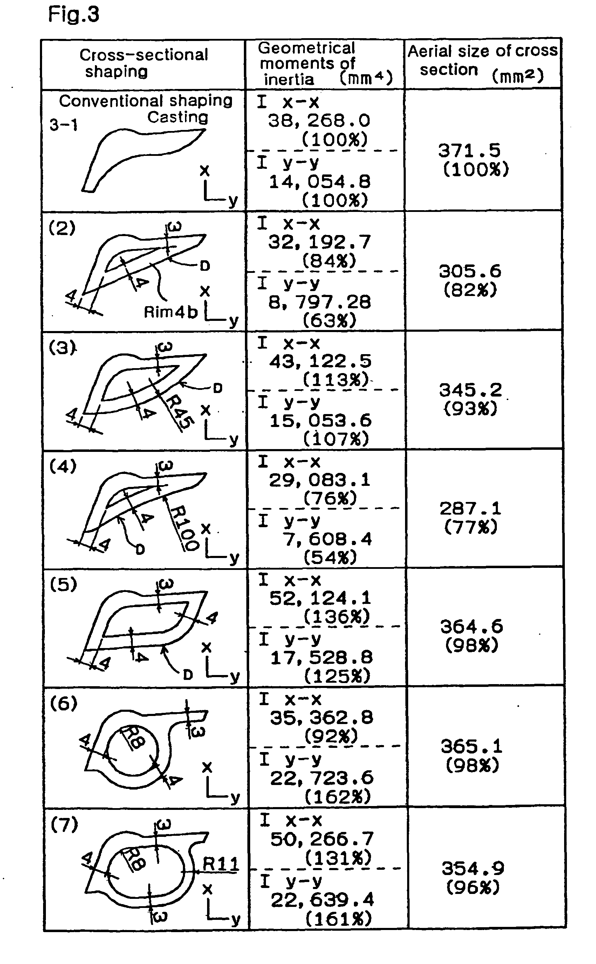

In view of the above, typical conventional shaping of a rim of wheel by a casting technique, which shaping has been adopted by automobile makers, is adopted as a basic shaping as shown in Fig. 3. For each of the tubular shaping constructions from this, ratios of the aerial size of the cross section and the geometrical moments of inertia with regard to the basic shaping 3-1 are calculated and shown in the Fig. 3. The casted wheel is inferior to the forged wheel in view of compression and tensile strengths of the light alloy material. In view of difficulty in completely deleting of failure in crystal structure and of gas bubble and also in view of requirement imposed by the automobile maker, thickness of rim wall 1a is designed to be large. Thus, cross sectional area of the rim wall 1a becomes about 1.5 time of that of the forged one.

In a tubular shaping construction 3-2 on Fig. 3, the additional rim wall 4b (please see Fig. 1(b)) is integrally formed to form a cavity 5b. Shaping of the additional rim 4b is modified to give tubular shaping construction 3-3 to 3-7 as shown in the figure.

Tubular shaping constructions 3-3 and 3-5 give cross-sectional areas no more than that of the typical conventional shaping 3-1; and have well-balanced geometrical moments of inertia about the x axis and the y axis. Tubular shaping construction 3-4 gives low geometrical moment of inertia although giving a light weight construction, compared with the tubular shaping construction 3-2. Hence, the additional rim 4b is preferred to protrude outwardly.

Tubular shaping construction 3-5 is constructed such that flat walls are added onto the smoothly curved walls of the tubular shaping construction 3-3, and has a large extent of variability and best balancing. Thus, further investigations and modifications are made onto the tubular shaping construction 3-5.

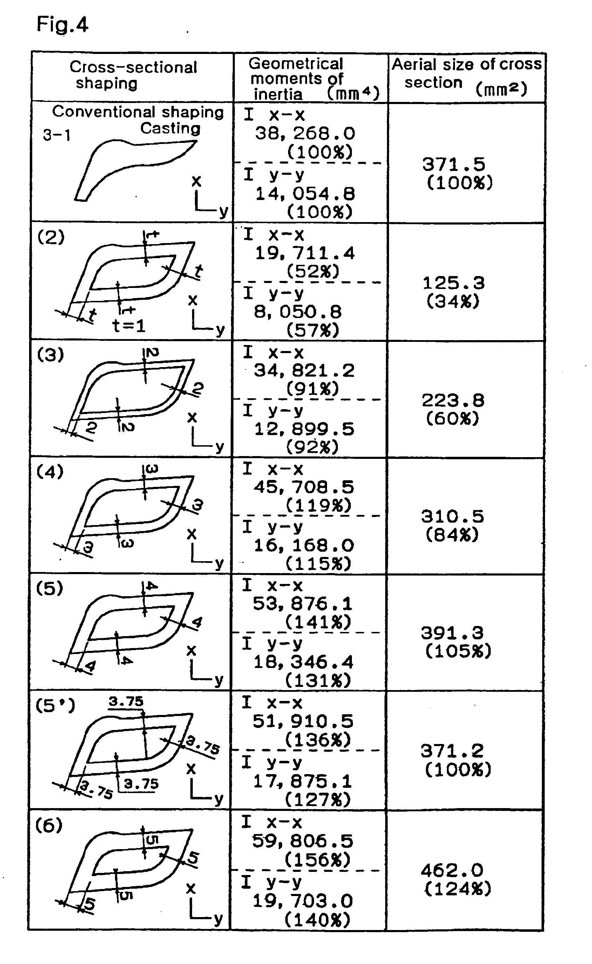

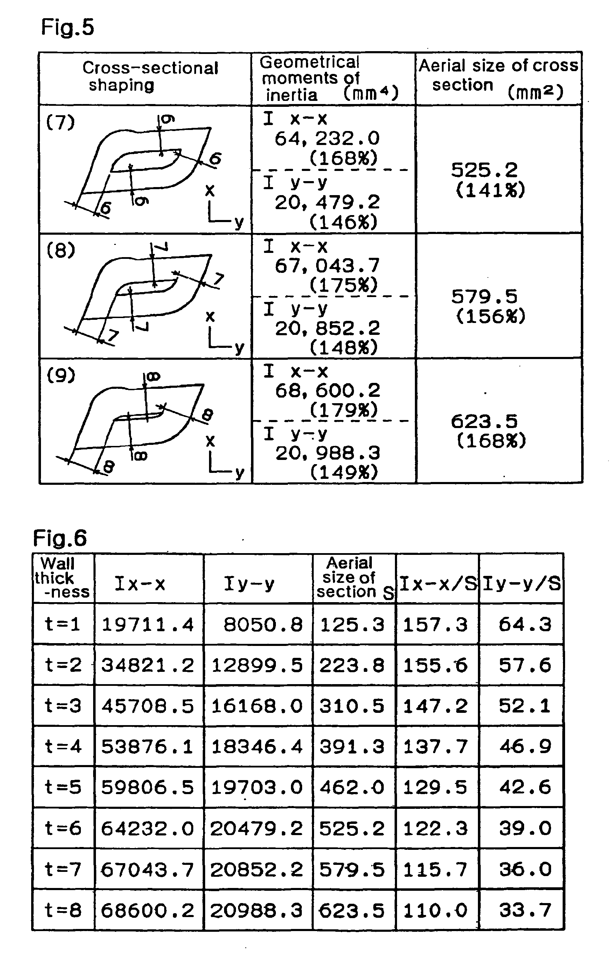

The bead seat B, the hump H, the slope wall S and the additional rim wall 4b, which consist the tubular rim part having the cavity, are varied in shape and wall thickness "t". To such variations on tubular shaping construction, the geometrical moments of inertia are calculated and shown in Figs. 4 and 5. Increase of thickness of the walls certainly causes increase in cross-sectional area and the geometrical moments of inertia. Because outside contour of the tubular rim part is kept constant at this varying, cross-sectional areal size of the cavity varies.

When thickness of the walls is 4mm as in 4-5 in Fig. 4, cross-sectional area is 105% of that of the typical conventional shaping 3-1. Tubular shaping construction 4-5' is modified from the tubular shaping construction 4-5 in a manner that the cross-section area becomes 100% of or same with that of the typical conventional shaping 3-1. In view of practical point of the wheels, wall thickness of 1 mm will cause uneven flow of molten metal at casting and is apt to cause dents when the wheels are knocked up by pebbles or some other objects; and moreover, the geometrical moment of inertia about the "x" axis is decreased. Meanwhile, wall thickness of no less than 6 mm makes 1.5 times of weight of the typical conventional shaping 3-1, and is not suitable for practical use. Fig. 6 shows in a table form, values obtained by dividing the geometrical moment of inertia by the areal size of the cross section respectively. Increase of the thickness causes decrease of the values, which are the geometrical moment of inertia per unit area of the cross section.

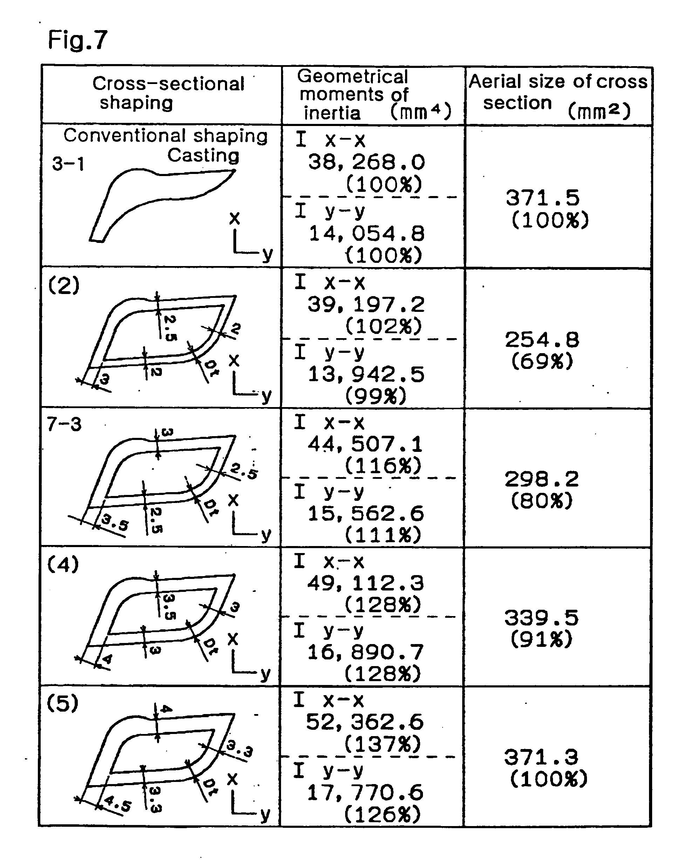

Fig. 7 is a table showing the aerial size of the cross section and the geometrical moment of inertia, which are obtained by varying wall thicknesses of the bead seat B, the slope wall S and the additional rim wall 4b so as to give the aerial size in a range of 70-100% of the typical conventional shaping 3-1 for casting technique.

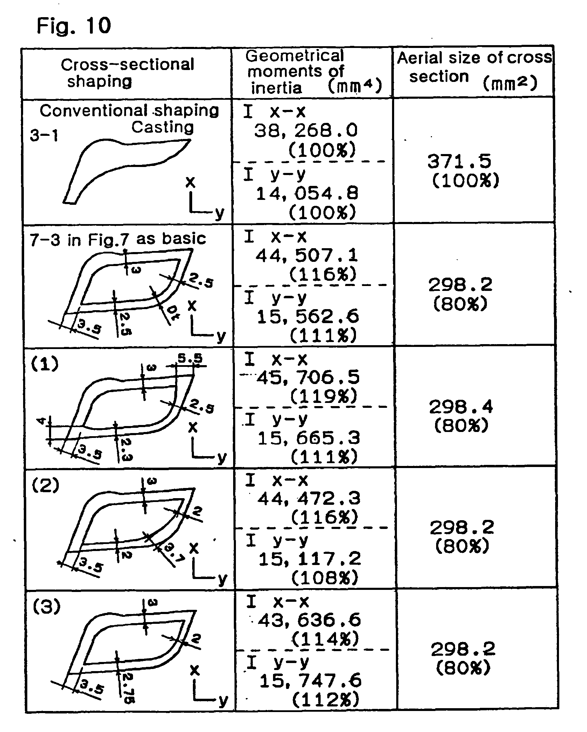

In view of easiness of the casting, the tubular shaping constructions 4-4 and 4-5 are preferred. The tubular shaping constructions 4-2 to 4-5 have well-balanced geometrical moments of inertia about the x axis and the y axis. It is known from these results that thicknesses St, Bt and Dt of the slope wall, the bead seat and the ornamental wall may be varied. Moreover, as shown exemplarily in Fig. 10 in a scope of the invention, wall thickness may be gradually or smoothly varied from one portion to another, according to running condition, time-wise change of production specification of tires, distribution of weight of automobile, fore-rear-wise distribution of driving force in 4-wheel drive vehicles, and time-wise change of seat suspension performance.

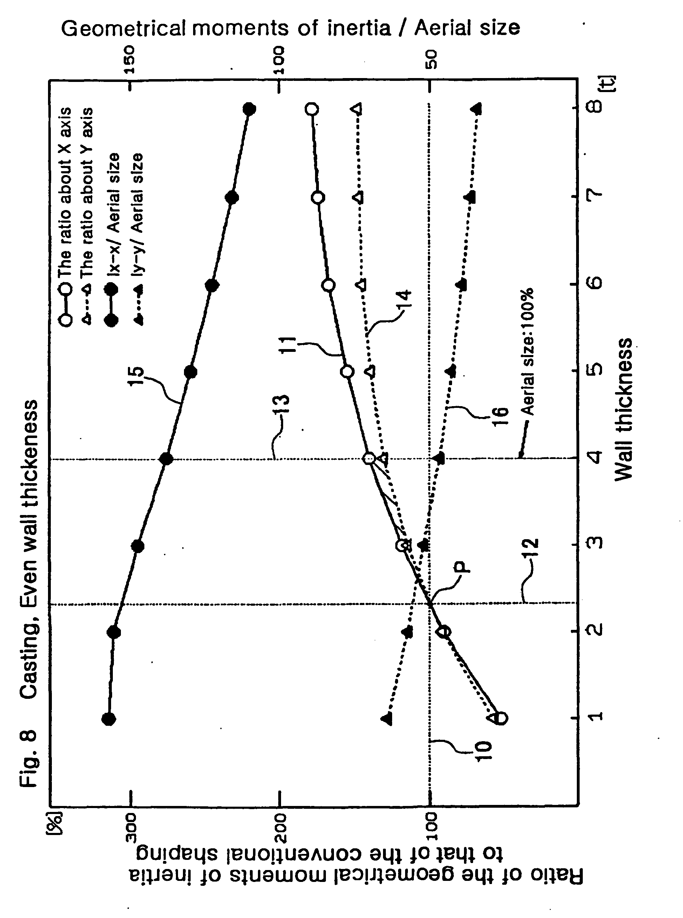

Fig. 8 is a graph showing plots of results already shown in Figs. 4-6, aiming for obtaining optimum wall thickness "t". The per-sectional-area geometrical moments of inertia about the x axis and the y axis decrease with increase of wall thickness "t"; and the geometrical moments of inertia increase with increase of wall thickness "t".

In the graph of Fig. 8, a horizontal line 10 is drawn to a level of the geometrical moments of inertia at 100% of that of the typical conventional shaping construction 3-1; a vertical line 12 is drawn at an intersection point P between the horizontal line 10 and a curve 11 of the geometrical moment of inertia about x axis; and a vertical line 13 is drawn at a point of 3.75mm thickness where the aerial size becomes 100% of that of the typical conventional shaping construction. Optimum area is designated by a hatched area in the figure, which is surrounded by the two vertical lines 11 and 12 and four curves, which are the curve 13 of the geometrical moment of inertia about x axis, the curve 14 of the geometrical moment of inertia about y axis, a curve 15 for the per-sectional-area geometrical moments of inertia about the x axis and a curve 16 for the per-sectional-area geometrical moments of inertia about the x axis. Hence, optimum range of wall thickness is 2.3 mm to 4 mm; and 3-4mm is most preferable when both of workability and practical application are taken into consideration.

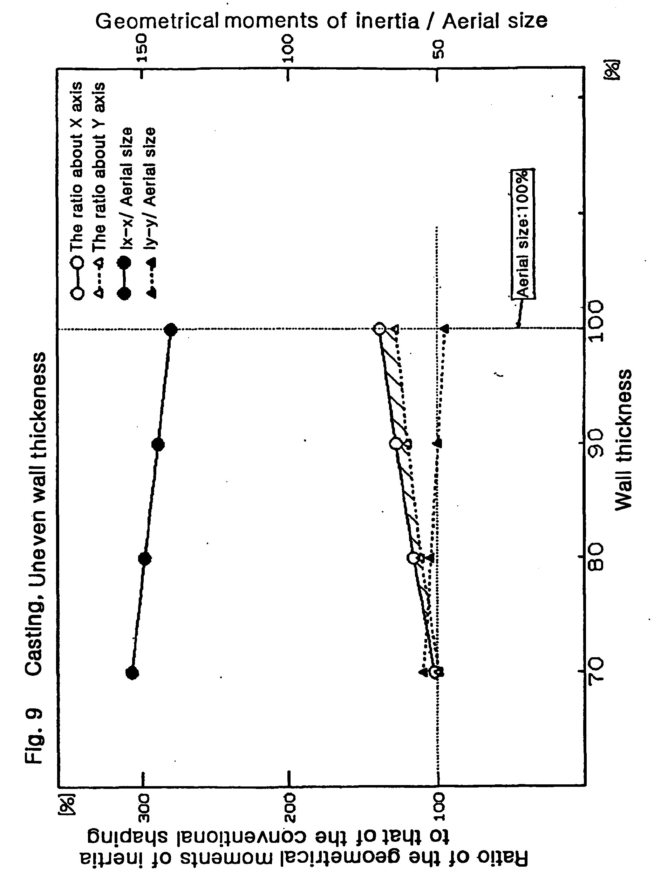

Fig. 7 shows, in a tabular form, the aerial size of the cross section, the geometrical moments of inertia and their ratio when thicknesses Bt, St and Dt of the bead seat, the slope wall and the ornamental wall D are set at thought-to-be preferred values. Fig. 9 is a graph plotting the results on the Fig. 7. Hatched area on the Fig. 9 represents considerably limited conditions in respect of shaping construction; the aerial size of the cross section is no more than 100% and the geometrical moments of inertia are no less than 100%.

### Embodiment 2

In foregoing embodiments, a cavity is formed by the additional rim wall 4b as shown in Fig. 1(b). Here, based on tubular shaping construction 7-3 on the Fig. 7, investigation is made on the constructions in each of which thickness of the ornamental wall D or the additional rim wall 4b is uneven or varied, as to be shown in Fig. 10. As seen from the results, thicknesses Bt, Strand Dt of the bead seat, the slope wall and the ornamental wall D may be portion-to-portion wise varied as to improve the geometrical moments of inertia, in a scope of the invention. A portion having an enlarged thickness may be pyrovided to any of the wall elements forming the tubular construction, so as to facilitate flow of molten metal during the casting process. The results of Fig. 10 is useful when to take such construction and useful for suppressing the cross section to be no more than 100% of that of the typical conventional shaping construction.

### Embodiment 3

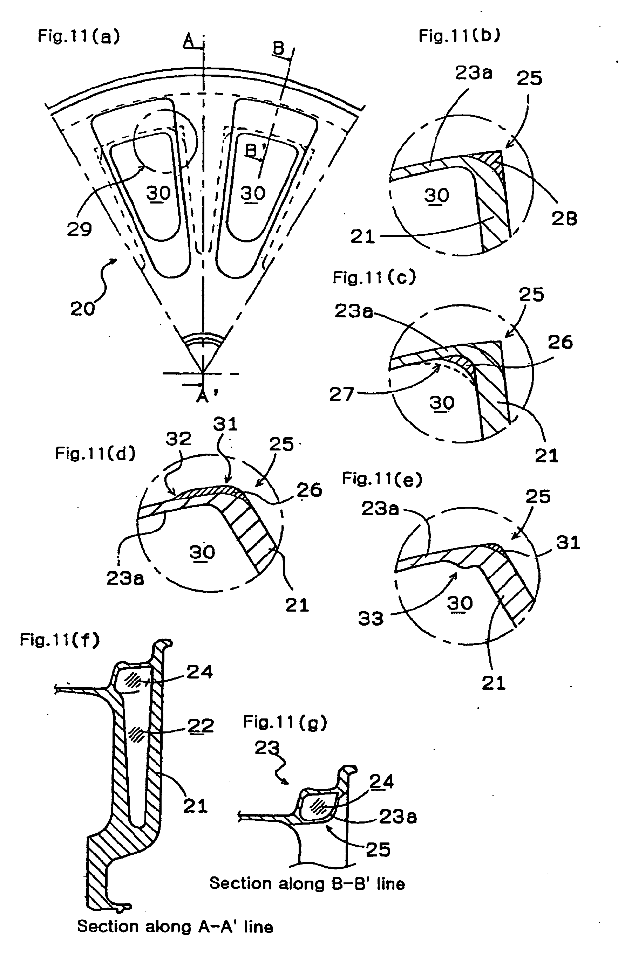

Fig. 11 (a) in a partial elevation view showing a wheel 20 in which hollow spokes are joined with the rim having a cavity. Figs. 11 (f) and 11 (g) are cross-sectional views respectively along A-A' line and B-B' line in Fig. 11 (a). Fig. 11(f) shows a vertical cross section along a center line of the spoke 21, whose cavity 22 is communicated with cavity 24 of the rim. Fig. 11(g) shows a vertical cross section of rim part 23 having the cavity. Hence, at junctions 25 between the rim 23 and the spokes, thick walls of the spokes are joined with thin wall 23a of the rim. Such juncture of the walls is indicated as enclosed by a dashed-line circle 29 in Fig. 11 (a) and shown in enlarged sectional views of Figs. 11 (b)-(e).

When to form the cavity in the spokes by casting technique, core molds are arranged in directions toward center part of the wheel and are then removed. The junctions 25 will have a simple structure when the walls are joined to form nearly right-angled corners; nevertheless, such junctures will lead to stress concentration and cracks. Hence, preferably, augmentation is made to hatched area 26 in the Fig. 11 (c) in a manner that thickness is gradually enlarged.

Because the augmentation will increase wall thickness of the spoke 21, the augmentation has to make a curved face longer at along the rim than that at along the spoke, as indicated by a dashed line 27. This affects contour of the openings 30 shown in Fig. 11 (a), thus affects ornamental design and increase weight of the wheel. To improve this, core molds for removing the hatched areas 28 are prepared as shown in Fig. 11 (b), or the trim-wise rounding is made by cutting. By this construction, thick wall of the spoke smoothly continues with the thinner wall of the rim, so that stress concentration hardly takes place and weight decreases.

Fig. 11 (d) shows a construction in which walls of the spokes 21 are connected with the rim as to be inclined to the rim wall. In this way, angle between the walls at the junction 25 becomes small. To avoid abrupt change in wall thickness at the junction 25, between thick wall of the spoke 21 and thinner wall 23a of the rim, the augmentation 31 is made in a manner to form a curved face with small curvature by eliminating corner edges and to be extended onto the rim wall 12a for its reinforcing, as indicated by a hatched area 26. On end of the extension of the augmentation, a concave portion 32 is formed. Fig. 11 (e) shows a construction in which the augmentation 31 is formed at junction between the rim's cavity and the spoke's cavity; and an undulation 33 is formed on the opening 30 and at along surface of the spokes 21 as to reinforce the wheel. The junction acts as a shock absorber by forming portions having large aerial size of cross section where stress-applying direction varies.

### Embodiment 4

Fig. 13 shows a construction in which the tubular rim construction as explained above is employed for inner rim. A bead seat B', a hump H', a slope wall S' and outer rim flange 2a' may be formed as same as above. Then, in such arrangement, the ornamental wall D is not viewable when the wheels are mounted on a vehicle and thus, an ornamental appeal is not required to the wall. Hence, a wall corresponding to the ornamental wall D is formed as an extension of the rim well 3a. Also in such construction, rigidity of the wheel is increased and thus, wall thickness at the rim well 3a may be made to be smaller as to decrease weight of the wheel as a whole.

### Embodiment 5

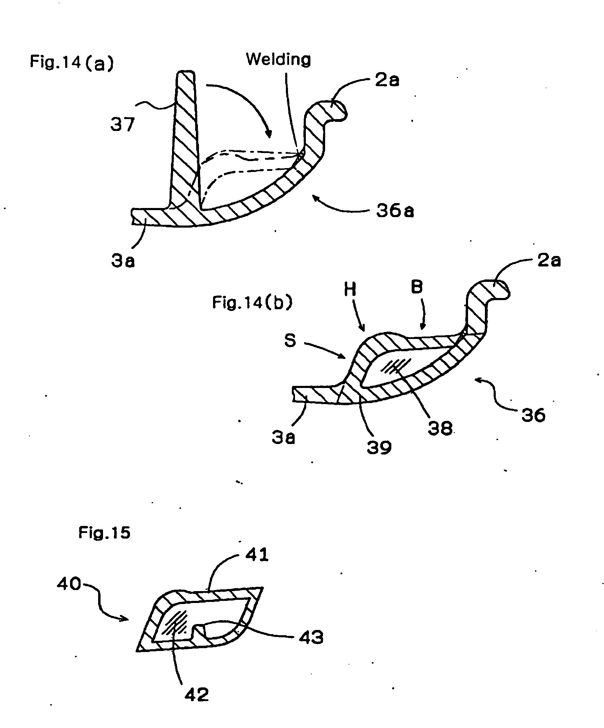

Techniques for forming the cavity 24 in the above embodiments may be conventional ones. Fig. 14 exemplarily illustrates one of the techniques. Fig. 14(a) shows a process step for forming the tubular rim construction and shows a rim 36a directly after the casting. Outer rim flange 2a, rim well 3a and part of the tubular construction are formed by the casting, simultaneously with a flange 37. Subsequently, the flange 37 is reclined to a position indicated by dashed lines, by pressing a roller tool of spinning machine. Then, end of the flange 37 is welded onto a portion that is to comprise the tubular construction. Fig. 14(b) shows a completed rim 36 comprised of the tubular rim part 39, which is obtained after cutting on a side face of the flange 37 as to form the slope wall S, the hump H and the bead seat B, which define a cavity 38.

### Modification 6

When cross-sectional aerial size of the cavity is considerably large, a rib may be formed on inner face on the cavity 42, at a time freely designing the ornamental wall. Fig. 15 exemplarily shows such a construction. A rib 43 is formed annularly on cavity-side face of a wall of the tubular rim part, which wall is integrally connected with the spokes, in order to increase rigidity of the tubular construction. The rib may be simultaneously formed at the casting by making direction of projecting the rib agree with direction of removing from a mold tool. The annular rib may also be attached by welding after the casting; and in such case, the rib may be provided on any position at inside of the cavity in ways to improve the geometrical moments of inertia.

### Industrial Applicability

According to the invention, the rim having a cavity and light-weight construction as well as excellent rigidity is obtained. The rim may be connected with hollow spokes so that cavities in the spokes are communicated with the cavity in the rim. The rim may also be connected with solid or be connected by screws with the rim, when for two-piece wheel for example. In any of such connecting manners, wheels with improved ornamental appeal are obtained due to the rims having the cavities as to further improve quality of the wheel.

Whereas casting technique is mainly mentioned in the hereto explanation, liquid metal forging, die casting or any other technique may be employed for producing a wheel or semi-finished wheel, as far as the technique employs a process for pouring heat-wise molten light metal into a mold and then cooling the metal in the mold.

### Brief Description of the Drawing

Figs. 1(a) and 1(b) are vertical cross-sectional views showing an essential part of outer rim according to Embodiment 1, Fig. 1(a) shows a rim obtained by forging technique and Fig. 1(b) shows a rim obtained by the casting technique;
Fig. 2 is a table form with illustrations according to Embodiment 1, showing various tubular shaping constructions for rims obtained by the forging technique, and showing results of calculation on aerial sizes of the cross sections and the geometrical moments of inertia;
Fig. 3 is a table form with illustrations according to Embodiment 1, showing various tubular shaping constructions for rims obtained by the casting technique, and showing results of calculation on aerial sizes of the cross sections and the geometrical moments of inertia;
Fig. 4 is a table form with illustrations, showing various tubular shaping constructions as modified from the tubular shaping construction 3-5 in the Fig. 3 by varying wall thicknesses;
Fig. 5 is a table form with illustrations as a continued part from the Fig. 4;
Fig. 6 is a table showing ratios between the geometrical moments of inertia and aerial size of the cross section on Figs. 4 and 5;
Fig. 7 is a table form with illustrations according to Embodiment 2, showing various tubular shaping constructions for rims obtained by the casting technique as varied in respect of wall thicknesses, and showing results of calculation on aerial sizes of the cross sections and the geometrical moments of inertia;
Fig. 8 is a graph according to Embodiment 1, showing effects of stepwise change of wall thickness, on the aerial sizes of cross sections and the geometrical moments of inertia, when wall thickness is even in each of the tubular shaping construction;
Fig. 9 is a graph according to Embodiment 2, showing effects of stepwise change of wall thickness, on the aerial sizes of cross sections and the geometrical moments of inertia, when wall thickness is uneven in each of the tubular shaping construction;
Fig. 10 is a table form with illustrations according to Embodiment 2, showing various tubular shaping constructions as modified from the tubular shaping construction 7-3 in the Fig. 7 by varying wall thicknesses, and showing results of calculation on aerial sizes of the cross sections and the geometrical moments of inertia;
Fig. 11 (a) is a partial elevational view of the wheel in which hollow spokes are joined to the rim having a cavity, Figs. 11(b) and 11(c) are enlarged partial views of joints between the spoke and the rim, Figs. 11 (d) and 11(e) are cross-sectional views of the joints when angle at the joints between the rim and the spoke is varied, and Figs. 11(f) and 11 (g) are cross-sectional views respectively along A-A' line and B-B' line of the Fig. 11 (a);
Figs. 12(a)-(c) are explanatory sectional views of the tubular shaping construction for explaining the geometrical moments of inertia, according to Embodiment 1;
Fig. 13 is a sectional view of a tubular construction on inner rim flange according to Embodiment 4;
Fig. 14(a) and 14(b) are cross-sectional views of a rim respectively showing a to-be-tubular construction before forming the cavity and a completed tubular construction after processing, according to Embodiment 5; and
Fig. 15 is a cross-sectional view showing tubular rim construction in which a rib is formed on inner face of the cavity, according to Embodiment 6.
Reference numerals or marks: 1 outer rim obtained by forging technique; 1' outer rim obtained by casting technique; 1 a a rim wall by the forging technique; 1b a rim wall by the casting technique; 2 outer rim; 3 rim well; 4 a rim wall; 5 a cavity by the forging technique; 5' a cavity by the casting technique; 20 a wheel having cavities; 21 a spoke; 23 a rim; 25 a joint; 30 an opening; 31 augmentation; 33 undulation; 37 a flange; 38 a cavity; and 43 a rib.

## Claims

1. A light alloy wheel with an outer rim (1) having a tubular rim part that is consisting of: a bead seat (B); a hump (H); a slope wall (S); an ornamental wall (D), which is arranged on a side opposite to the tire-mounting side of the outer rim (1) and which bridges from a juncture between extension from the tire-mounting-side contour of the bead seat (B) and the rim's exterior contour to a juncture between extension from the tire-mounting-side contour of the slope wall (S) and the rim's exterior contour; and a cavity (5) defined by these four walls (B, H, S, D), wherein
the wheel is for a four-wheel automobile and is stipulated by ETRTO or JATMA,
when assuming a solid rim part that is defined by the junctures and consisting of the bead seat (B), the hump (H) and the slope wall (S) and has a typical standardised shaping construction in respect of inclination, dimensions such as height and length and wall thicknesses for guaranteeing a required strength of the outer rim (1), and in conformity mainly with design specification of a tire,
shaping and wall thicknesses of the tubular rim part are set so that:
(a) a ratio of cross-sectional area of the tubular rim part to that of the solid rim part is no more than 100%; and
(b) the geometrical moment of inertia of the tubular rim part, about an axis that is parallel to the wheel's axis and runs through the centroid of a cross section of the tubular rim part, is no less than the geometrical moment of inertia of the solid rim part, about an axis that is parallel to the wheel's axis and runs through the centroid of a cross section of the solid rim part; and the geometrical moment of inertia of the tubular rim part, about an axis that is vertical to the wheel's axis and runs through the centroid of a cross section of the tubular rim part, is no less than the geometrical moment of inertia of the solid rim part, about an axis that is vertical to the wheel's axis and runs through the centroid of a cross section of the solid rim part,
**characterised in that**
the wall thickness (Bt, Ht, St, Dt) of each of said four walls (B, H, S, D) of the tubular rim part is in a range of 2.3 mm to 4 mm, while no protrusion is formed on surfaces of the cavity (5);
the cavity (5) is substantially a parallelogram in cross section; and
the areal size of total cross section of the tubular rim part is 298.2 mm² or less; the geometrical moment of inertia of the tubular rim part, about an axis that is vertical to the wheel's axis and runs through the centroid of a cross section of the tubular rim part, is no less than 44,472.3 mm⁴; and the geometrical moment of inertia of the tubular rim part, about an axis that is parallel to the wheel's axis and runs through the centroid of a cross section of the tubular rim part, is no less than 15,117.2 mm⁴; or
the areal size of total cross section of the tubular rim part is 339.5 mm² or less; the geometrical moment of inertia of the tubular rim part, about an axis that is vertical to the wheel's axis and runs through the centroid of a cross section of the tubular rim part, is no less than 49,112.3 mm⁴; and the geometrical moment of inertia of the tubular rim part, about an axis that is parallel to the wheel's axis and runs through the centroid of a cross section of the tubular rim part, is no less than 16,890.7 mm⁴; or
the areal size of total cross section of the tubular rim part is 364.6 mm² or less; the geometrical moment of inertia of the tubular rim part, about an axis that is vertical to the wheel's axis and runs through the centroid of a cross section of the tubular rim part, is no less than 52,124.1 mm⁴; and the geometrical moment of inertia of the tubular rim part, about an axis that is parallel to the wheel's axis and runs through the centroid of a cross section of the tubular rim part, is no less than 17,528.8 mm⁴.

2. A light alloy wheel according to claim 1, wherein, with respect solely to the tubular rim part, part of or portion of either of the ornamental wall (D), the bead seat (B), the hump (H) and the slope wall (S) is modified in respect of said thickness (Bt, Ht, St, Dt) and is comprised of a flat wall and/or a curved wall so as to improve the geometrical moments of inertia.

3. A light alloy wheel according to claim 1, wherein the tubular rim part has an opening at each of joints between hollow spokes and the tubular rim part, so that cavities of the hollow spokes are communicated with the cavity (5) in the tubular rim part.

4. A light alloy wheel according to claim 1 or 2, wherein, at around joints between the cavity (5) in the tubular rim part and hollow spokes, part of or portion of either of the ornamental wall (D), the bead seat (B), the hump (H) and the slope wall (S) is modified in respect of said thickness (Bt, Ht, St, Dt) and is comprised of a flat wall and/or a curved wall so as to improve the geometrical moments of inertia.

5. A light alloy wheel according to claim 1, wherein
the dimension in the wheel-radial direction between the bead seat (B) and a rim well (3) is 17.0 mm or more; and
the inclination of the slope wall (S) is 20 degrees or more.

6. A light alloy wheel according to claim 1, wherein the ornamental wall (D) is at least partly, convex outwardly.

7. A light alloy wheel according to any one of claims 1-3, wherein, at around joints between the cavity (5) in the tubular rim part and hollow spokes, augmentation and/or trim-wise rounding is made on inner faces of the hollow spokes and/or the tubular rim part.

8. A light alloy wheel with an inner rim having a tubular rim part that is constructed as in the tubular rim part on the outer rim (1) as recited in claim 1.

## Patentansprüche

1. Leichtlegierungsrad mit einer Außenfelge (1) mit einem rohrförmigen Felgenabschnitt bestehend aus: einem Wulstsitz (B); einer Aufwölbung (H); einer schrägen Wand (S); einer Zierwand (D), die auf einer Seite entgegensetzt zu der Reifenbefestigungsseite der Außenfelge (1) angeordnet ist und eine Verbindungsstelle zwischen der Erstreckung von der Reifenbefestigungsseiten-Kontur des Wulstsitzes (B) und der Felgenaußenkontur zu einer Verbindungsstelle zwischen der Erstreckung von der Reifenbefestigungsseiten-Kontur der schrägen Wand (S) und der Felgenaußenkontur überbrückt; und einem durch diese vier Wände (B, H, S, D) eingegrenzten Hohlraum (5), wobei
das Rad für ein vierrädriges Automobil ist und durch ETRTO oder JATMA festgelegt ist,
bei Zugrundelegung eines massiven Felgenabschnitts, der durch die Verbindungsstellen definiert ist und aus dem Wulstsitz (B), der Aufwölbung (H) und der schrägen Wand (S) besteht und eine typische standardisierte Formgebungskonstruktion bezüglich der Neigung, der Abmessungen wie Höhe und Länge und der Wanddicken zur Gewährleistung einer erforderlichen Festigkeit der Außenfelge (1), und in wesentlichem Einklang mit den Designspezifikationen eines Reifens,
Formgebung und Wanddicken des rohrförmigen Felgenabschnitts so eingestellt sind, dass:
(a) ein Verhältnis der Querschnittsfläche des rohrförmigen Felgenabschnitts zu der des massiven Felgenabschnitts nicht mehr als 100% beträgt; und
(b) das geometrische Trägheitsmoment des rohrförmigen Felgenabschnitts um eine Achse, die parallel zu der Radachse ist und durch den Schwerpunkt eines Querschnitts des rohrförmigen Felgenabschnitts verläuft, nicht kleiner ist als das geometrische Trägheitsmoment des massiven Felgenabschnitts um eine Achse, die parallel zu der Radachse ist und durch den Schwerpunkt eines Querschnitts des massiven Felgenabschnitts verläuft; und das geometrische Trägheitsmoment des rohrförmigen Felgenabschnitts um eine Achse, die senkrecht zu der Radachse steht und durch den Schwerpunkt eines Querschnitts des rohrförmigen Felgenabschnitts verläuft, nicht kleiner ist als das geometrische Trägheitsmoment des massiven Felgenabschnitts um eine Achse, die senkrecht zu der Radachse steht und durch den Schwerpunkt eines Querschnitts des massiven Felgenabschnitts verläuft,
**dadurch gekennzeichnet, dass**
die Wanddicke (Bt, Ht, St, Dt) jeder der vier Wände (B, H, S, D) des rohrförmigen Felgenabschnitts in einem Bereich von 2,3 mm bis 4 mm liegt, wobei auf den Flächen des Hohlraums (5) kein Vorsprung gebildet ist;
der Hohlraum (5) im Querschnitt im Wesentlichen ein Parallelogramm ist; und
die Flächengröße des Gesamtquerschnitts des rohrförmigen Felgenabschnitts höchstens 298,2 mm² beträgt; das geometrische Trägheitsmoment des rohrförmigen Felgenabschnitts um eine Achse, die senkrecht zu der Radachse steht und durch den Schwerpunkt eines Querschnitts des rohrförmigen Felgenabschnitts verläuft, nicht kleiner ist als 44.472,3 mm⁴; und das geometrische Trägheitsmoment des rohrförmigen Felgenabschnitts um eine Achse, die parallel zu der Radachse ist und durch den Schwerpunkt eines Querschnitts des rohrförmigen Felgenabschnitts verläuft, nicht kleiner ist als 15.117,2 mm⁴; oder
die Flächengröße des Gesamtquerschnitts des rohrförmigen Felgenabschnitts höchstens 339,5 mm² beträgt; das geometrische Trägheitsmoment des rohrförmigen Felgenabschnitts um eine Achse, die senkrecht zu der Radachse steht und durch den Schwerpunkt eines Querschnitts des rohrförmigen Felgenabschnitts verläuft, nicht kleiner ist als 49.112,3 mm⁴; und das geometrische Trägheitsmoment des rohrförmigen Felgenabschnitts um eine Achse, die parallel zu der Radachse ist und durch den Schwerpunkt eines Querschnitts des rohrförmigen Felgenabschnitts verläuft, nicht kleiner ist als 16.890,7 mm⁴; oder
die Flächengröße des Gesamtquerschnitts des rohrförmigen Feigenabschnitts höchstens 364,6 mm² beträgt; das geometrische Trägheitsmoment des rohrförmigen Felgenabschnitts um eine Achse, die senkrecht zu der Radachse steht und durch den Schwerpunkt eines Querschnitts des rohrförmigen Felgenabschnitts verläuft, nicht kleiner ist als 52.124,1 mm⁴; und das geometrische Trägheitsmoment des rohrförmigen Felgenabschnitts um eine Achse, die parallel zu der Radachse ist und durch den Schwerpunkt eines Querschnitts des rohrförmigen Felgenabschnitts verläuft, nicht kleiner ist als 17.528,8 mm⁴.

2. Leichtlegierungsrad nach Anspruch 1, wobei ausschließlich bezogen auf den rohrförmigen Felgenabschnitt ein Abschnitt oder Teil der Zierwand (D), des Wulstsitzes (B), der Aufwölbung (H) oder der schrägen Wand (S) bezüglich der Dicke (Bt, Ht, St, Dt) modifiziert ist und aus einer flachen Wand und/oder einer gekrümmten Wand besteht, um so die geometrischen Trägheitsmomente zu verbessern.

3. Leichtlegierungsrad nach Anspruch 1, wobei der rohrförmige Felgenabschnitt eine Öffnung an jeder Verbindung zwischen hohlen Speichen und dem rohrförmigen Felgenabschnitt aufweist, so dass Hohlräume der hohlen Speichen mit dem Hohlraum (5) in dem rohrförmigen Felgenabschnitt kommunizieren.

4. Leichtlegierungsrad nach Anspruch 1 oder 2, wobei an Stellen um Verbindungen zwischen dem Hohlraum (5) in dem rohrförmigen Felgenabschnitt und hohlen Speichen ein Abschnitt oder Teil der Zierwand (D), des Wulstsitzes (B), der Aufwölbung (H) oder der schrägen Wand (S) hinsichtlich der Dicke (Bt, Ht, St, Dt) modifiziert ist und aus einer flachen Wand und/oder einer gekrümmten Wand besteht, um so die geometrischen Trägheitsmomente zu verbessern.

5. Leichtlegierungsrad nach Anspruch 1, wobei
die Abmessung in der radialen Radrichtung zwischen dem Wulstsitz (B) und einem Felgenbett (3) mindestens 17,0 mm beträgt; und
die Neigung der schrägen Wand (S) mindestens 20 Grad beträgt.

6. Leichtlegierungsrad nach Anspruch 1, wobei die Zierwand (D) wenigstens teilweise nach außen konvex geformt ist.

7. Leichtlegierungsrad nach einem der Ansprüche 1 bis 3, wobei um Verbindungsstellen zwischen dem Hohlraum (5) in dem rohrförmigen Felgenabschnitt und hohlen Speichen herum Verstärkungen und/oder abgleichende Rundungen an Innenflächen der hohlen Speichen und/oder des rohrförmigen Felgenabschnitts gemacht sind.

8. Leichtlegierungsrad mit einer Innenfelge, die einen rohrförmigen Felgenabschnitt aufweist, der so konstruiert ist wie der rohrförmige Felgenabschnitt der Außenfelge (1) gemäß Anspruch 1.

## Revendications

1. Roue en alliage léger avec une jante extérieure (1) ayant une partie de jante tubulaire qui est constituée par : un siège de talon (B), une bosse (H), une paroi inclinée (S), une paroi décorative (D), laquelle est agencée sur un côté opposé au côté de montage de pneumatique de la jante extérieure (1) et qui forme un pont depuis une jonction entre le prolongement du contour de côté de montage de pneumatique du siège de talon (B) et le contour extérieur de jante jusqu'à une jonction entre le prolongement du contour du côté de montage de pneumatique de la paroi inclinée (S) et le contour extérieur de jante, et une cavité (5) définie par ces quatre parois (B, H, S, D), dans laquelle
la roue est destinée à une automobile à quatre roues et est stipulée par la norme ETRTO ou JATMA,
dans l'hypothèse d'une partie de jante solide qui est définie par les jonctions et est constituée du siège de talon (B), de la bosse (H) et de la paroi inclinée (S) et a une structure de forme standardisée typique par rapport à l'inclinaison, aux dimensions telles que la hauteur et la longueur et les épaisseurs de paroi pour garantir une résistance requise de la jante extérieure (1), et principalement en conformité avec une spécification de conception d'un pneumatique,
la forme et les épaisseurs de paroi de la partie de jante tubulaire sont définies de sorte que :
(a) un rapport de surface de section transversale de la partie de jante tubulaire sur celle de la partie de jante solide n'est pas supérieur à 100 %, et
(b) le moment géométrique d'inertie de la partie de jante tubulaire, autour d'un axe qui est parallèle à l'axe de roue et passe par le centroïde d'une section transversale de la partie de jante tubulaire, n'est pas inférieur au moment géométrique d'inertie de la partie de jante solide, autour d'un axe qui est parallèle à l'axe de roue et passe par le centroïde d'une section transversale de la partie de jante solide, et le moment géométrique d'inertie de la partie de jante tubulaire, autour d'un axe qui est vertical à l'axe de roue et passe par le centroïde d'une section transversale de la partie de jante tubulaire, n'est pas inférieur au moment géométrique d'inertie de la partie de jante solide, autour d'un axe qui est vertical à l'axe de roue et passe par le centroïde d'une section transversale de la partie de jante solide,
**caractérisée en ce que**
l'épaisseur de paroi (Bt, Ht, St, Dt) de chacune desdites quatre parois (B, H, S, D) de la partie de jante tubulaire est comprise dans une plage de 2,3 mm à 4 mm, alors qu'aucune saillie n'est formée sur les surfaces de la cavité (5),
la cavité (5) est sensiblement un parallélogramme en section transversale, et
la taille en superficie de la section transversale totale de la partie de jante tubulaire est de 298,2 mm² ou moins, le moment géométrique d'inertie de la partie de jante tubulaire, autour d'un axe qui est vertical à l'axe de roue et passe par le centroïde d'une section transversale de la partie de jante tubulaire, n'est pas inférieur à 44 472,3 mm⁴, et le moment géométrique d'inertie de la partie de jante tubulaire, autour d'un axe qui est parallèle à l'axe de roue et passe par le centroïde d'une section transversale de la partie de jante tubulaire, n'est pas inférieur à 15 117,2 mm⁴, ou
la taille en superficie de la section transversale totale de la partie de jante tubulaire est de 339,5 mm² ou moins, le moment géométrique d'inertie de la partie de jante tubulaire autour d'un axe qui est vertical à l'axe de roue et passe par le centroïde d'une section transversale de la partie de jante tubulaire, n'est pas inférieur à 49 112,3 mm⁴, et le moment géométrique d'inertie de la partie de jante tubulaire, autour d'un axe qui est parallèle à l'axe de roue et passe par le centroïde d'une section transversale de la partie de jante tubulaire, n'est pas inférieur à 16 890,7 mm⁴, ou
la taille en superficie de la section transversale totale de la partie de jante tubulaire est de 364,6 mm² ou moins, le moment géométrique d'inertie de la partie de jante tubulaire, autour d'un axe qui est vertical à l'axe de roue et passe par le centroïde d'une section transversale de la partie de jante tubulaire, n'est pas inférieur à 52 124,1 mm⁴, et le moment géométrique d'inertie de la partie de jante tubulaire, autour d'un axe qui est parallèle à l'axe de roue et passe par le centroïde d'une section transversale de la partie de jante tubulaire, n'est pas inférieur à 17 528,8 mm⁴.

2. Roue en alliage léger selon la revendication 1, dans laquelle, uniquement par rapport à la partie de jante tubulaire, une part ou une partie de l'un de la paroi décorative (D), du siège de talon (B), de la bosse (H) ou de la paroi inclinée (S) est modifiée par rapport à ladite épaisseur (Bt, Ht, St, Dt) et comprend une paroi plate et/ou une paroi incurvée de manière à améliorer les moments géométriques d'inertie.

3. Roue en alliage léger selon la revendication 1, dans laquelle la partie de jante tubulaire a une ouverture au niveau de chacun des joints entre des rayons creux et la partie de jante tubulaire, de sorte que des cavités des rayons creux communiquent avec la cavité (5) dans la partie de jante tubulaire.

4. Roue en alliage léger selon la revendication 1 ou 2, dans laquelle, autour des joints entre la cavité (5) dans la partie de jante tubulaire et les rayons creux, une part ou une partie de l'un de la paroi décorative (D), du siège de talon (B), de la bosse (H) ou de la paroi inclinée (S) est modifiée par rapport à ladite épaisseur (Bt, Ht, St, Dt) et comprend une paroi plate et/ou une paroi incurvée de manière à améliorer les moments géométriques d'inertie.

5. Roue en alliage léger selon la revendication 1, dans laquelle
la dimension dans la direction radiale de roue entre le siège de talon (B) et une embase de jante (3) est de 17,0 mm ou supérieure, et
l'inclinaison de la paroi inclinée (S) est de 20 degrés ou plus.

6. Roue en alliage léger selon la revendication 1, dans laquelle la paroi décorative (D) est au moins partiellement convexe vers l'extérieur.

7. Roue en alliage léger selon l'une quelconque des revendications 1 à 3, dans laquelle, autour des joints entre la cavité (5) dans la partie de jante tubulaire et les rayons creux, un arrondi dans le sens augmentation et/ou réduction est réalisé sur les faces intérieures des rayons creux et/ou la partie de jante tubulaire.

8. Roue en alliage léger avec une jante intérieure ayant une partie de jante tubulaire qui est construite comme dans la partie de jante tubulaire de la jante extérieure (1) telle que définie dans la revendication 1.
